# FASCICULE DE BREVET EUROPEEN

(11) **EP 3 283 857 B1**
(45) Date de publication et mention de la délivrance du brevet: **05.06.2019**
(21) Numéro de dépôt: 16719455.4
(22) Date de dépôt: 04.04.2016
(51) Int. Cl.: B65G 17/12, G01G 13/22, B65G 47/96

(54) **DISPOSITIF DE TRANSPORT D'OBJETS ET DISPOSITIF DE CONVOYAGE ET DE PESÉE ÉQUIPÉ DE TELS DISPOSITIFS DE TRANSPORT**
VORRICHTUNG ZUM TRANSPORT VON OBJEKTEN UND MIT SOLCHEN TRANSPORTVORRICHTUNGEN AUSGESTATTETE FÖRDERUNGS- UND WIEGEVORRICHTUNG
DEVICE FOR TRANSPORTING OBJECTS AND CONVEYING AND WEIGHING DEVICE PROVIDED WITH SUCH TRANSPORTING DEVICES

(30) Priorité: 17.04.2015 FR 1553455
(43) Date de publication de la demande: 21.02.2018
(73) Titulaire: MAF Agrobotic, 82000 Montauban (FR)
(72) Inventeur: BLANC, Philippe, 82000 Montauban (FR)
(74) Mandataire: Cabinet BARRE LAFORGUE & associés
(86) Numéro de dépôt international: PCT/FR2016/050761
(87) Numéro de publication internationale: WO 2016/166439

(56) Documents cités:
- EP-A1- 0 540 126
- EP-A1- 1 083 008
- WO-A1-00/71446
- WO-A1-2005/037453
- AU-B2- 701 354
- FR-A1- 2 960 866

## Description

L'invention concerne un dispositif de transport d'objet(s) tel(s) que des fruits ou légumes comprenant un réceptacle de réception d'au moins un objet -notamment d'un unique objet-, un support adapté pour pouvoir être associé à un dispositif d'entraînement selon une direction, dite direction longitudinale, et un mécanisme de liaison du réceptacle au support permettant, d'une part, le basculement latéral du réceptacle par rapport au support en vue du déchargement de chaque objet porté par le réceptacle, et, d'autre part, un déplacement relatif du réceptacle vers le haut par rapport au support en vue du pesage de chaque objet porté par le réceptacle. Elle concerne également un dispositif de convoyage et de pesée -notamment un dispositif de tri- d'objet(s) tel(s) que des fruits ou légumes équipé d'au moins une pluralité de tels dispositifs de transport.

On connaît déjà des dispositifs de convoyage comprenant des dispositifs de transport d'objets tels que des fruits ou légumes comprenant des réceptacles, agencés selon une ligne de convoyage -notamment interposés entre des rouleaux de convoyage à axes transversaux de la ligne de convoyage- et qui, d'une part, sont basculants latéralement sur au moins un côté de la ligne de convoyage et, d'autre part, sont montés avec des possibilités de déplacements verticaux de façon à permettre le pesage lors du passage au droit d'un poste de pesage du dispositif de convoyage.

Lorsque ces dispositifs de transport sont utilisés pour le tri des objets, les réceptacles sont basculants latéralement sur au moins un côté de la ligne de convoyage. Les réceptacles basculants de pesage connus présentent tous différents inconvénients. Tout d'abord, le mécanisme de liaison permettant les déplacements verticaux pour le pesage interdit souvent des possibilités de basculement sur les deux côtés de la ligne de convoyage, ce qui limite considérablement la souplesse de fonctionnement et les performances du dispositif de convoyage. En effet, le dispositif de convoyage permet en particulier le tri des objets et le fait de faire basculer les réceptacles d'un côté et de l'autre augmente le nombre de postes de réception des objets pour leur tri ou permet de diminuer la longueur du dispositif pour un même nombre de postes de réception. Plus généralement, des possibilités de basculement des deux côtés permettent d'adapter un même réceptacle à différentes configurations de dispositifs de convoyage.

Par ailleurs, dans les dispositifs de transport connus, le mécanisme de liaison de chaque réceptacle sur son support présente une cinématique (glissières en porte-à-faux, guidage rotatif...) qui est complexe, encombrante, nécessite un grand nombre de pièces, et interfère souvent avec celle des organes de pesage et/ou génère des réactions indésirables de frottement, nuisant à la précision du pesage.

Il est à noter à ce titre qu'il est important que les organes de pesage coopèrent directement et uniquement avec le réceptacle, et en particulier que le mécanisme de liaison ne soit pas lui-même supporté par les organes de pesage, non seulement pour que la masse supportée par les organes de pesage soit aussi faible que possible, mais également afin notamment d'éviter tout mouvement relatif susceptible d'entraîner des efforts d'inertie et tout basculement intempestif lors du pesage.

Dans certains dispositifs connus le réceptacle est articulé par rapport au support autour d'au moins un axe longitudinal (FR2960866) ou transversal (WO2005037453), voire un parallélogramme déformable (US5306877), la pesée s'effectuant par pivotement d'au moins une pièce du mécanisme autour d'un tel axe. Ce type de montage pose le problème d'une absence de linéarité du fait de la rotation et de frottements dans les axes de pivotement pouvant aboutir à imprécision de la pesée, notamment dans les environnements humides et/ou sales tels que les installations agricoles. En outre, les organes de pesage forment souvent quatre points de pesée du réceptacle en vue du pesage. Dans la plupart des cas, au moins trois points de pesée distincts sont nécessaires. Il en résulte un poste de pesage complexe et susceptible d'instabilités. Il est en effet très difficile d'assurer que les trois ou quatre points de pesée soient parfaitement coplanaires et le restent au cours de la durée de vie de la machine.

Dans d'autres dispositifs de transport connus les réceptacles sont formés uniquement de rouleaux transversaux adaptés pour permettre le pesage et qui sont basculants latéralement pour le déchargement. Là encore, le pesage nécessite quatre points de pesée. Ces dispositifs de transport connus présentent aussi l'inconvénient d'une relative complexité du montage des rouleaux, et sont donc d'un coût important et/ou d'une moins bonne qualité de pesage en termes de précision, de fidélité et de fiabilité dans le temps, du fait des quatre points de pesée.

Dans tous les dispositifs de transport connus, le mécanisme de liaison est donc particulièrement complexe, encombrant en hauteur, nécessite un grand nombre de pièces, de formes tourmentées, coûteuses à fabriquer, générant une tare de valeur importante, sources de dysfonctionnements et susceptibles d'interférer avec le pesage, nuisant à sa précision, à sa fidélité et à sa fiabilité.

L'invention vise donc à pallier ces inconvénients en proposant un dispositif de transport dans lequel le mécanisme de liaison est simple, comprend un faible nombre de pièces, et procurant un guidage fiable, précis et sans frottement de chaque réceptacle par rapport à son support, permettant un basculement latéral - notamment un basculement bilatéral- et un pesage précis et fidèle de chaque réceptacle et de chaque objet.

L'invention vise aussi à proposer un tel dispositif de transport dans lequel le mécanisme de liaison est peu encombrant en hauteur.

L'invention vise aussi à proposer un tel dispositif de transport dans lequel le réceptacle en position de pesée est précisément guidé et maintenu par rapport au support et par rapport aux organes de pesage. L'invention vise aussi à proposer un tel dispositif de transport dans lequel la tare de pesage (masse à vide supportée par les organes de pesage) est faible.

L'invention concerne donc un dispositif de transport d'objets comprenant un réceptacle apte à recevoir au moins un objet, un support adapté pour pouvoir être associé à un dispositif d'entraînement selon une direction, dite direction longitudinale d'entraînement, et un mécanisme de liaison du réceptacle au support, ce mécanisme de liaison étant agencé pour :
- solidariser le réceptacle et le support en translation longitudinale,
- permettre un basculement latéral du réceptacle en vue du déchargement latéral de chaque objet porté par le réceptacle,
- et autoriser un déplacement relatif du réceptacle en translation verticale par rapport au support selon une course adaptée au pesage du réceptacle et du (des) objet(s) qu'il porte,
caractérisé en ce que ledit mécanisme de liaison comprend au moins une bille interposée et emprisonnée entre au moins une portée du réceptacle et au moins une portée du support pour pouvoir rouler sans glisser verticalement sur au moins l'une de ces portées.

Dans tout le texte, le terme « direction » est utilisé au sens commun du terme et non au sens mathématique, c'est-à-dire désigne une orientation incluant un sens. Les termes « antérieur » et « postérieur » et leurs dérivés sont utilisés en référence à la direction longitudinale, un organe antérieur étant situé vers l'aval dans le sens de déplacement selon la direction longitudinale par rapport à un organe postérieur.

Avantageusement et selon l'invention, au moins l'une desdites portées -notamment chaque portée- est une portée, dite portée verticale, s'étendant verticalement sur une distance supérieure au diamètre d'une bille coopérant avec cette portée verticale, pour permettre un déplacement vertical relatif de cette bille roulant sans glissement le long de cette portée verticale.

L'invention procure ainsi un maintien rigide précis et constant du réceptacle par rapport au support dans la direction longitudinale d'entraînement, permettant un entraînement en translation continu sans risque d'à-coups, et un guidage des déplacements relatifs du réceptacle par rapport au support, aussi bien en rotation lors des basculements qu'en translation verticale lors du pesage, par l'intermédiaire d'au moins une bille de ce mécanisme de liaison pouvant à la fois faire office de pivot et pouvant rouler sans glisser sur au moins une portée verticale du réceptacle et/ou du support. Il en résulte un mécanisme de liaison particulièrement simple, formé d'un faible nombre de pièces, peu encombrant, fiable, n'interférant pas avec la pesée et ne nuisant donc ni à sa précision, ni à sa fidélité, ni à sa sensibilité, et compatible avec un basculement bilatéral du réceptacle.

En particulier, il est possible de réaliser un dispositif de transport selon l'invention de telle sorte que le guidage du réceptacle par rapport au support en position haute de pesée intervienne uniquement par l'intermédiaire d'une ou plusieurs billes roulant sans glisser, c'est-à-dire sensiblement sans frottement. Autrement dit le mécanisme de liaison d'un dispositif de transport selon l'invention peut être agencé de telle sorte qu'au moins en position haute de pesée le réceptacle et le support soient en contact principalement -notamment exclusivement- par l'intermédiaire d'au moins une bille roulant sans glisser sur au moins une portée verticale du réceptacle et/ou du support et n'induisant aucune réaction verticale sur le réceptacle.

Par ailleurs avantageusement et selon l'invention au moins une portée verticale est une portée transversale c'est-à-dire adaptée pour produire une résultante de réaction d'appui d'une bille sur cette portée qui est orientée selon la direction longitudinale d'entraînement. Par exemple une telle portée verticale transversale présente une piste de roulement plane verticale orthogonale à la direction longitudinale d'entraînement, ou deux pistes latérales verticales de roulement symétriques l'une de l'autre par rapport à un plan longitudinal et non parallèles à la direction longitudinale d'entraînement.

Chaque bille est emprisonnée dans le mécanisme de liaison entre au moins deux portées -notamment entre au moins deux portées verticales- du réceptacle et du support, mais libre de rouler sans glisser verticalement contre au moins l'une de ces portées. Ces portées sont au moins pour partie en regard l'une de l'autre dans la direction longitudinale d'entraînement de sorte que chaque bille est apte à transmettre des efforts longitudinaux -notamment des efforts d'entraînement en translation longitudinale et/ou des efforts d'inertie- entre le réceptacle et le support.

Par ailleurs, dans certains modes de réalisation, avantageusement et selon l'invention, une unique bille est interposée et emprisonnée entre au moins une paire de portées comprenant une portée du réceptacle et une portée du support. Rien n'empêche en variante ou en combinaison de prévoir plusieurs billes interposées et emprisonnées entre au moins une paire de telles portées.

En outre, dans certains modes de réalisation, avantageusement et selon l'invention, le dispositif de transport est aussi caractérisé en ce que le mécanisme de liaison d'une paire de pièces formée d'un réceptacle et d'un support présente :
- une portée verticale antérieure et une portée verticale postérieure de l'une de ces deux pièces, ces portées verticales antérieure et postérieure étant écartées l'une de l'autre selon la direction longitudinale,
- au moins une bille, dite bille antéro-postérieure, prisonnière d'une fente verticale de l'autre pièce traversant l'épaisseur de cette dernière dans la direction longitudinale, cette bille antéro-postérieure présentant un diamètre inférieur à l'écartement desdites portées verticales antérieure et postérieure, et supérieur à l'épaisseur de ladite fente verticale dans la direction longitudinale de façon à pouvoir venir au contact de l'une des portées verticales antérieure et postérieure.

L'écartement desdites portées verticales antérieure et postérieure est donc supérieur à l'épaisseur de ladite autre pièce autour de ladite fente verticale. Le réceptacle est donc monté avec un jeu longitudinal non nul (mais aussi faible que possible pour permettre le roulement de la bille) par rapport au support. Mais ce jeu est rattrapé en fonctionnement sous l'effet des efforts d'inertie. Le diamètre de chaque bille antéro-postérieure est aussi inférieur à la longueur de la fente verticale et desdites portées verticales antérieure et postérieure pour permettre le roulage de cette bille le long de la fente verticale et desdites portées verticales antérieure et postérieure.

Avantageusement, dans certains modes de réalisation et selon l'invention, la fente verticale présente une extrémité supérieure ouverte permettant le montage de chaque bille antéro-postérieure, de préférence par engagement en force par déformation élastique de bords en regard de cette extrémité supérieure de façon à interdire toute extraction intempestive ultérieure de la bille antéro-postérieure hors de la fente verticale. Également ladite fente verticale présente avantageusement des pistes de roulement latérales profilées concaves conformées pour retenir entre elles chaque bille antéro-postérieure et permettre le roulage de cette bille dans la fente verticale.

Par ailleurs, dans certains modes de réalisation, avantageusement et selon l'invention, chaque fente verticale reçoit une unique bille antéro-postérieure. Rien n'empêche de prévoir en variante plusieurs billes antéro-postérieures dans au moins une fente verticale.

Avantageusement et selon l'invention, au moins une fente verticale est ménagée dans le support et lesdites portées verticales antérieure et postérieure sont ménagées sur le réceptacle. En variante ou en combinaison, au moins une fente verticale est ménagée dans le réceptacle et lesdites portées verticales antérieure et postérieure sont ménagées sur le support.

En outre, avantageusement et selon l'invention, au moins une fente verticale et lesdites portées verticales antérieure et postérieure sont situées en partie haute du mécanisme de liaison, au moins une bille antéro-postérieure procurant donc un guidage entre le réceptacle et le support en partie haute du support.

Par ailleurs, dans certains modes de réalisation, avantageusement et selon l'invention, un dispositif de transport selon l'invention comporte deux fentes verticales écartées latéralement l'une de l'autre comprenant chacune au moins une bille antéro-postérieure. Avantageusement et selon l'invention les deux fentes verticales s'étendent dans même plan transversal et en partie haute de ladite autre pièce.

Ces deux fentes verticales et lesdites portées verticales antérieure et postérieure et les billes antéro-postérieures correspondantes d'un mécanisme de liaison d'un dispositif de transport selon certains modes de réalisation avantageux de l'invention procurent un guidage latéral stable en maintenant l'alignement avec la direction longitudinale lors des déplacements verticaux relatifs du réceptacle par rapport au support, et participent aussi au guidage lors du basculement latéral.

Par ailleurs, dans certains modes de réalisation, avantageusement et selon l'invention le mécanisme de liaison d'une paire de pièces formée d'un réceptacle et d'un support présente au moins une bille antérieure interposée et emprisonnée entre au moins une portée antérieure du réceptacle et au moins une portée antérieure du support pour pouvoir rouler sans glisser verticalement sur et entre ces portées antérieures. L'une de ces portées antérieures est orientée vers l'aval de la direction longitudinale, tandis que l'autre portée antérieure est orientée vers l'amont de la direction longitudinale. Un léger jeu longitudinal (non nul mais aussi faible que possible pour permettre le roulement de la bille) peut être ménagé entre ces portées antérieures. De préférence au contraire chaque bille antérieure est en contact de roulement avec chacune des portées antérieures, sans jeu longitudinal. Avantageusement et selon l'invention lesdites portées antérieures définissent au moins une piste verticale de roulement d'une bille antérieure du mécanisme de liaison. L'une au moins des portées antérieures est donc une portée verticale.

Également, dans certains modes de réalisation, avantageusement et selon l'invention le mécanisme de liaison d'une paire de pièces formée d'un réceptacle et d'un support présente au moins une bille postérieure interposée et emprisonnée entre au moins une portée postérieure du réceptacle et au moins une portée postérieure du support pour pouvoir rouler sans glisser verticalement sur et entre ces portées postérieures. L'une de ces portées postérieures est orientée vers l'aval de la direction longitudinale, tandis que l'autre portée postérieure est orientée vers l'amont de la direction longitudinale. Un léger jeu longitudinal (non nul mais aussi faible que possible pour permettre le roulement de la bille) peut être ménagé entre ces portées postérieures. De préférence au contraire chaque bille postérieure est en contact de roulement avec chacune des portées postérieures, sans jeu longitudinal. Avantageusement et selon l'invention lesdites portées verticales postérieures définissent au moins une piste verticale de roulement d'une bille postérieure du mécanisme de liaison. L'une au moins des portées postérieures est donc une portée verticale.

Par ailleurs, dans certains modes de réalisation avantageusement et selon l'invention le mécanisme de liaison d'une paire de pièces formée d'un réceptacle et d'un support comprend un pivot à axe longitudinal permettant un basculement latéral du réceptacle d'un côté au moins du support en vue du déchargement des objets. Avantageusement et selon l'invention ledit pivot longitudinal est au moins pour partie formé d'une bille interposée entre une portée verticale du réceptacle orientée vers l'amont de la direction longitudinale d'entraînement et une portée verticale du support orientée vers l'aval de la direction longitudinale d'entraînement.

Par ailleurs, dans certains modes de réalisation avantageusement et selon l'invention le mécanisme de liaison est adapté pour permettre un basculement du réceptacle de chaque côté du support. Il s'agit donc d'un mécanisme de liaison à basculement bilatéral. En outre avantageusement et selon l'invention le mécanisme de liaison comprend un verrouillage du réceptacle en position centrale et basse de transport par rapport au support.

Par ailleurs, dans certains modes de réalisation avantageusement et selon l'invention chaque réceptacle est une coupelle adaptée pour recevoir individuellement un objet. Il peut s'agir avantageusement de godets ou de mains de transport individuel d'objets tels que des fruits ou légumes. L'invention s'applique néanmoins aussi à d'autres types de réceptacles, pouvant recevoir plusieurs objets chacun.

Dans un dispositif de transport selon l'invention lors des déplacements relatifs verticaux du réceptacle par rapport au support pour passer en position de pesée, et pour revenir en position basse de transport, le réceptacle est guidé par rapport au support et au contact de ce dernier principalement -notamment exclusivement- par l'intermédiaire de billes -notamment d'au moins trois billes, de préférence quatre billes- roulant sans glisser sur au moins une portée verticale. Il en résulte des frottements nuls ou négligeables, aucune réaction verticale sur le réceptacle induite par le mécanisme de liaison, qui est donc sans interférence avec la pesée, et un guidage fiable, stable et précis. Le tout est obtenu moyennant un très faible nombre de pièces, à savoir uniquement les deux pièces formées du réceptacle et du support, outre les billes.

L'invention s'étend également à un dispositif de convoyage et de pesée d'objets comprenant :
- une chaîne sans fin présentant un tronçon supérieur horizontal,
- un dispositif d'entraînement à défilement continu de la chaîne sans fin selon une direction longitudinale d'entraînement dudit tronçon supérieur,
- des dispositifs de transport d'objets répartis le long de la chaîne sans fin, portés par cette dernière et solidaires en translation de cette dernière, chaque dispositif de transport comprenant un réceptacle apte à recevoir au moins un objet, un support relié au dispositif d'entraînement pour être entraîné par ce dernier selon la direction longitudinale d'entraînement, et un mécanisme de liaison du réceptacle au support, ce mécanisme de liaison étant agencé pour :
   ∘ solidariser le réceptacle et le support en translation longitudinale,
   ∘ permettre un basculement latéral du réceptacle par rapport au support en vue du déchargement latéral de chaque objet porté par le réceptacle,
   ∘ et autoriser un déplacement relatif du réceptacle vers le haut par rapport au support selon une course adaptée au pesage du réceptacle et du (des) objet(s) qu'il porte,
- au moins un poste de pesée comprenant, sur ledit tronçon supérieur de la chaîne sans fin :
   ∘ au moins une glissière agencée le long d'une portion dudit tronçon supérieur de la chaîne sans fin pour pouvoir coopérer avec les réceptacles de façon à les déplacer par rapport aux supports verticalement vers le haut en position haute de pesée,
   ∘ et au moins un dispositif de pesage des réceptacles en position haute de pesée,
   caractérisé en ce que chaque dispositif de transport d'objets est un dispositif de transport d'objets selon l'invention.

Dans un dispositif de convoyage et de pesée d'objets selon l'invention le dispositif de pesage associé aux glissières coopère directement et uniquement avec les réceptacles en position de pesée.

Un dispositif de convoyage et de pesée d'objets selon l'invention peut être équipé d'au moins un dispositif de pesage simplifié. Ainsi, avantageusement et selon l'invention, un dispositif de convoyage et de pesée d'objets comprend au moins un poste de pesée comprenant des organes de pesage adaptés pour coopérer avec les réceptacles de convoyage de façon à les supporter temporairement en vue du pesage. Avantageusement, dans un dispositif de convoyage et de pesée d'objets selon l'invention, chaque dispositif de pesage est adapté pour supporter le réceptacle uniquement en deux points de pesée situés d'un côté et de l'autre -notamment symétriquement- d'un plan médian longitudinal du réceptacle.

Par ailleurs, dans certains modes de réalisation avantageux d'un dispositif de convoyage et de pesée d'objets selon l'invention chaque réceptacle est interposé sur la chaîne sans fin entre deux rouleaux montés librement rotatifs autour d'axes de rotation transversaux entraînés en translation selon la direction longitudinale par ladite chaîne sans fin.

Ainsi un dispositif de convoyage et de pesée d'objets selon l'invention comprend au moins une ligne de convoyage comprenant des rouleaux interposés entre les réceptacles de convoyage et adaptés pour guider et/ou entraîner la ligne de convoyage par rapport à au moins des portions d'un bâti et/ou pour supporter temporairement les objets dans au moins une portion de trajet de ces derniers. Une telle ligne de convoyage, dite ligne unique, permet de réaliser l'ensemble des analyses des objets, y compris les analyses optiques et leur pesage, puis leur tri par déchargement dans des postes de réception de triage, sans transfert des objets d'une ligne de convoyage à une autre.

Dans certains modes de réalisation, avantageusement et selon l'invention, chaque rouleau est monté de façon à pouvoir être déplacé en translation verticale par rapport à la chaîne sans fin, une paire de rouleaux successifs pouvant être déplacés vers le haut pour prendre en charge un objet initialement supporté par un réceptacle. De tels rouleaux peuvent aussi coopérer avec un dispositif d'entraînement en rotation de ces rouleaux autour de leur axe, de façon à faire tourner un objet supporté entre ces rouleaux, par exemple à des fins d'analyse optique de l'objet.

Avantageusement, dans certains modes de réalisation le réceptacle et les rouleaux qui le jouxtent dans la direction longitudinale sont imbriqués, chaque rouleau étant formé d'une pluralité de disques parallèles montés sur l'axe de rotation, le réceptacle comprenant des fentes permettant le passage de chaque disque de chaque rouleau qui le jouxte.

Dans certains modes de réalisation avantageusement et selon l'invention chaque support d'un dispositif de transport selon l'invention porte un réceptacle et un rouleau adjacent.

En outre avantageusement et selon l'invention ladite chaîne sans fin peut être formée par les supports des dispositifs de transport articulés les uns aux autres deux à deux successivement dans la direction longitudinale, chaque support formant ainsi un maillon de la chaîne. Un dispositif de convoyage et de pesée d'objets selon l'invention peut ainsi être formé d'un très faible nombre de pièces, qui peuvent être formées en matière synthétique moulée (à l'exception éventuellement des axes d'articulation des supports entre eux, des axes de rotation des rouleaux et de renforts métalliques longitudinaux pouvant être insérés dans les supports), tout en procurant des fonctions avancées et des performances remarquables, notamment en ce qui concerne la pesée et le tri des objets.

Un dispositif de convoyage et de pesée d'objets selon l'invention peut comprendre une unique ligne de convoyage (avec une chaîne sans fin unique) comprenant de tels réceptacles, notamment interposés entre des rouleaux de convoyage à axes transversaux entraînés en translation longitudinale avec les réceptacles. Rien n'empêche au contraire de prévoir une pluralité de lignes de convoyage parallèles.

Un dispositif de convoyage et de pesée d'objets selon l'invention peut former ou faire partie d'une unité de tri d'objets tels que des fruits ou légumes en fonction notamment de leur poids. Il peut s'agir par exemple avantageusement d'une calibreuse de fruits ou légumes. Il comporte alors, à l'aval d'au moins un poste de pesée des objets -et de préférence d'au moins un poste d'analyse optique et/ou d'autres critères de tri des objets-, une pluralité de zones de déchargement latéral des objets transportés et des dispositifs commandés de basculement sélectif des réceptacles en regard de chaque zone de déchargement latéral sur commande d'une unité centrale de tri reliée au poste de pesée et à ces dispositifs commandés de basculement sélectif.

L'invention concerne également un dispositif de transport et un dispositif de convoyage et de pesée d'objets caractérisés en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est un schéma en élévation d'un dispositif de convoyage, de pesée et de tri selon l'invention,

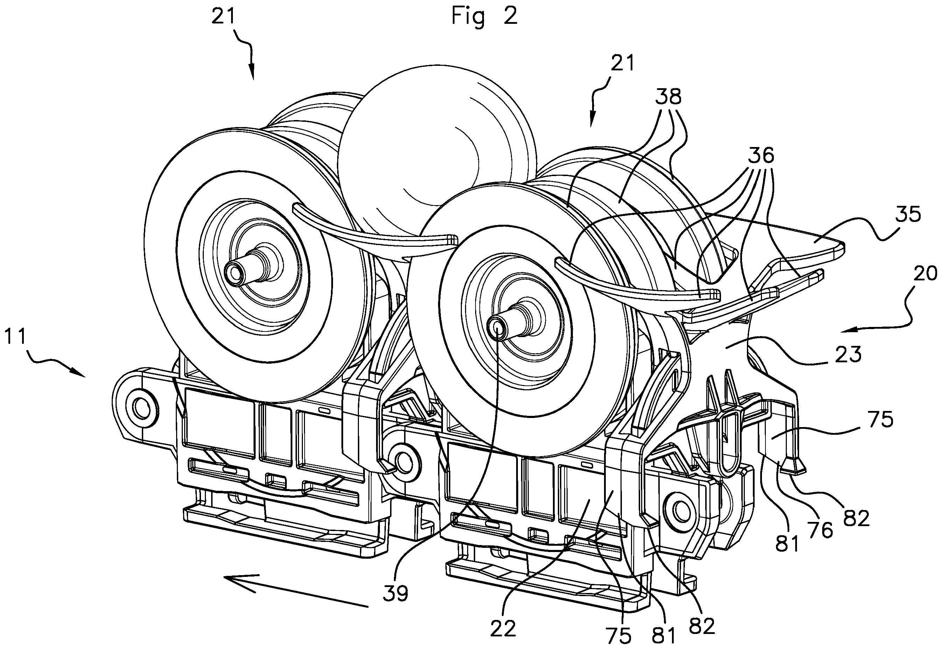

- la figure 2 est un schéma en perspective représentant deux dispositifs de transport selon l'invention reliés entre eux pour former une portion de chaîne sans fin d'un dispositif de convoyage, de pesée et de tri selon l'invention,

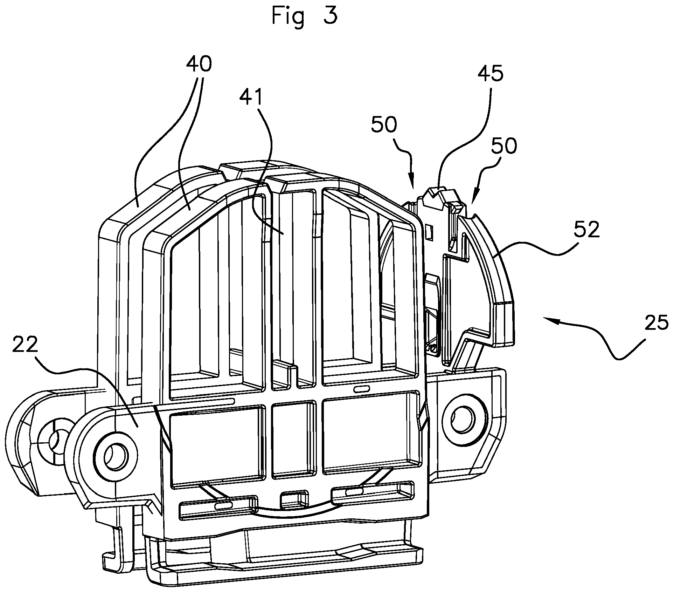

- la figure 3 est un schéma en perspective représentant une pièce moulée formant un support d'un dispositif de transport selon l'invention,

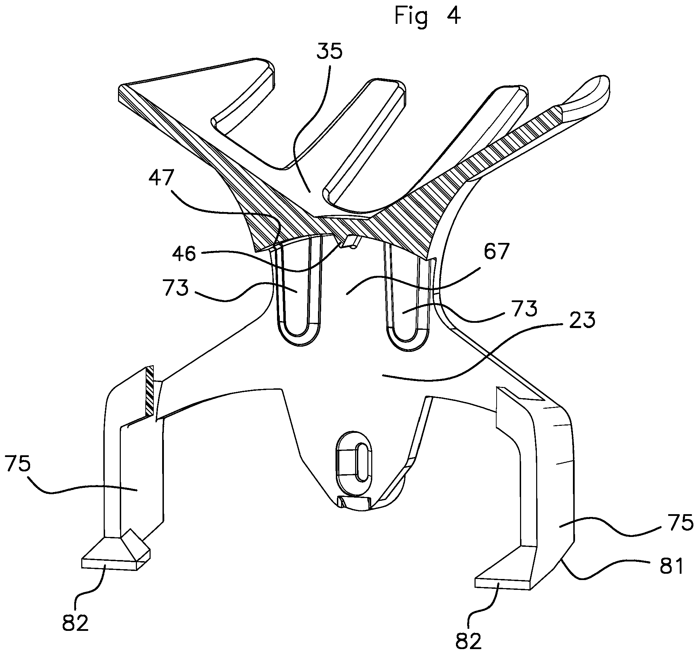

- la figure 4 est un schéma en perspective représentant avec arraché postérieur partiel une pièce moulée formant un réceptacle d'un dispositif de transport selon l'invention,
- la figure 5 est un schéma en perspective représentant un dispositif de transport selon l'invention en début de basculement latéral,

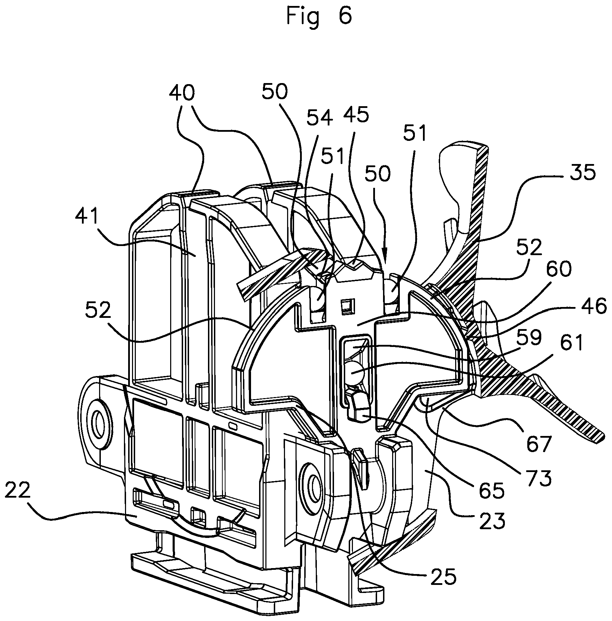

- la figure 6 est un schéma en perspective représentant avec arraché postérieur partiel un dispositif de transport selon l'invention en fin de basculement latéral, le rouleau n'étant pas représenté,

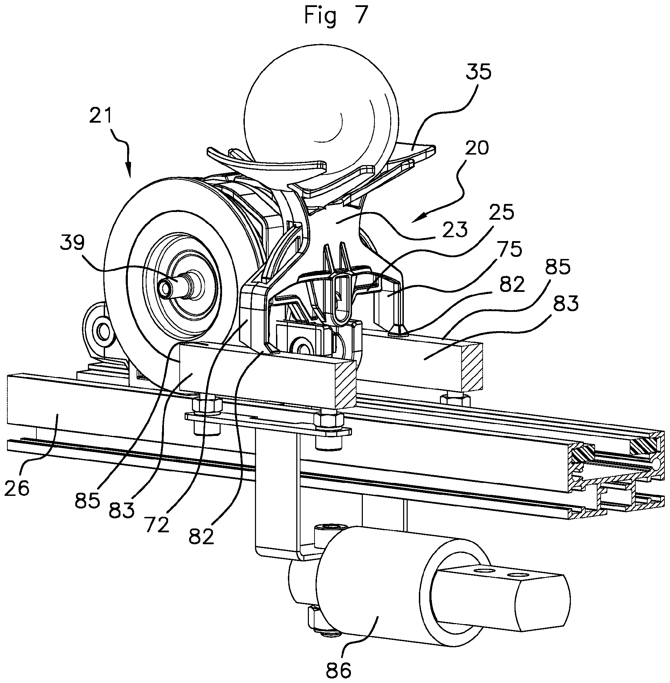

- la figure 7 est un schéma en perspective représentant un dispositif de transport selon l'invention en position haute de pesée,

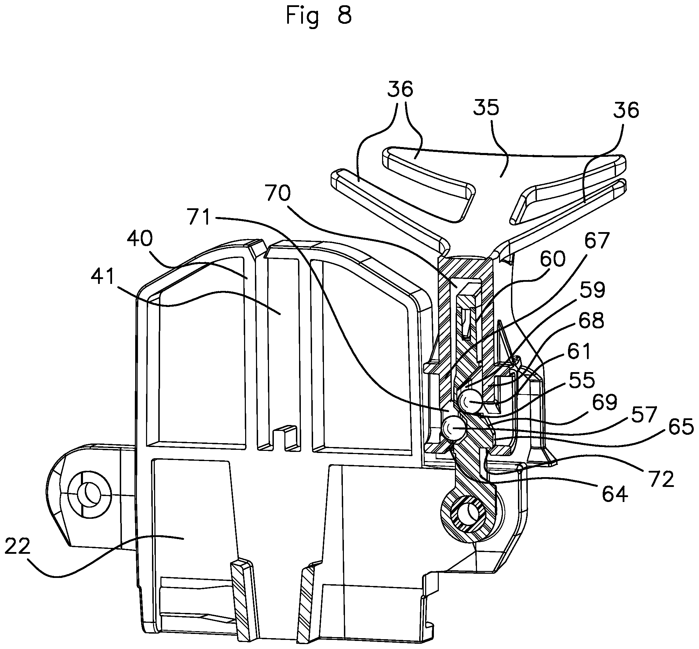

- la figure 8 est un schéma en perspective et en coupe longitudinale médiane représentant un dispositif de transport selon l'invention en position haute de pesée, le rouleau n'étant pas représenté,

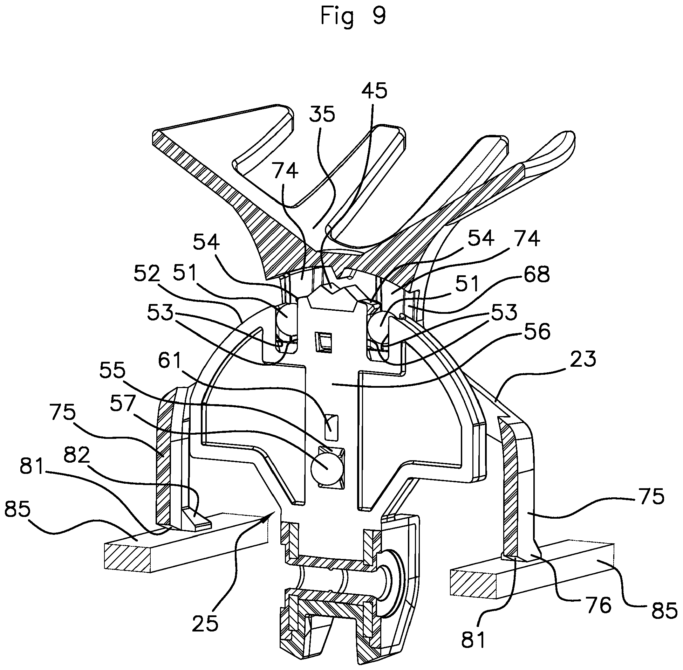

- la figure 9 est un schéma en perspective et en coupe transversale représentant un pied du support et un réceptacle d'un dispositif de transport selon l'invention en position haute de pesée.

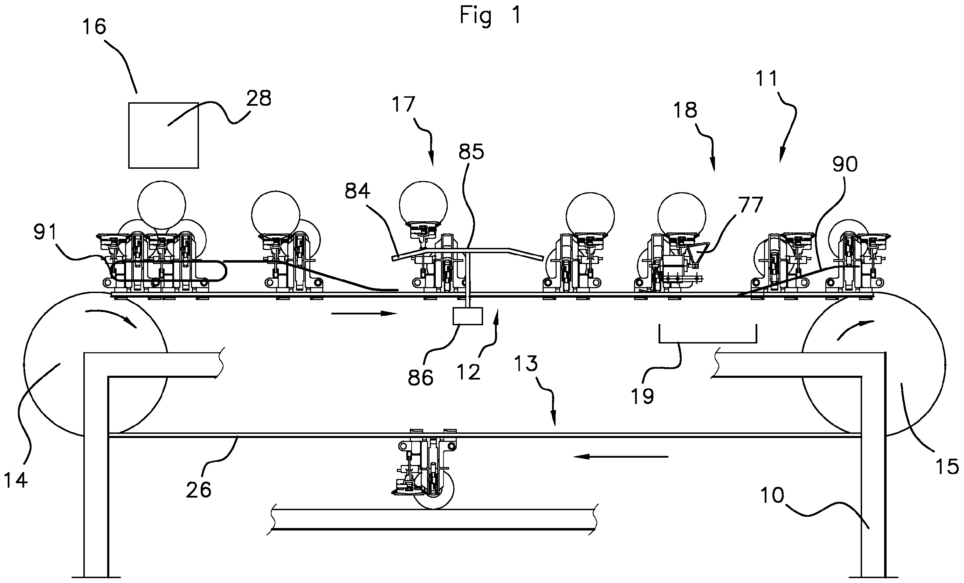

Le dispositif de convoyage, d'analyse et de tri d'objets représenté schématiquement à titre d'exemple sur la figure 1 (sur cette figure les échelles ne sont pas respectées, à des fins d'illustration) comprend un bâti 10 et une chaîne unique sans fin 11 formant une boucle sans fin qui, dans l'exemple est formée d'une pluralité de supports 22 articulés les uns aux autres deux à deux successivement par des axes transversaux tous parallèles les uns aux autres. Chaque support 22 est donc un maillon de la chaîne. Il est à noter que rien n'empêche en variante non représentée de prévoir que les supports 22 ne fassent pas office de maillons de la chaîne sans fin 11, et soient des cavaliers portés et entraînés par des maillons interconnectés d'une chaîne sans fin.

La chaîne 11 s'étend selon une direction longitudinale orthogonale aux axes d'articulation des supports 22. La chaîne 11 coopère avec deux tambours 14, 15 d'extrémité de façon à former une boucle sans fin et à présenter un tronçon aller supérieur 12 globalement horizontal et un tronçon retour inférieur 13 également globalement horizontal s'étendant sous le tronçon aller 12 et à l'aplomb de ce dernier.

Au moins l'un des deux tambours 14, 15 est entraîné en rotation par rapport au bâti 10 par un dispositif moteur (non représenté), de sorte que la chaîne sans fin 11 est également entraînée en continu selon sa direction longitudinale et dans un sens par ce tambour par rapport au bâti 10.

Le tronçon supérieur 12 comprend dans l'exemple représenté successivement un poste d'analyse optique 16, un poste de pesée 17, un poste de tri par basculement 18. Les objets à trier sont reçus à l'entrée du tronçon aller 12 à l'amont du poste d'analyse optique 16 dans des réceptacles 20 portés par les supports 22. Ils passent en regard des différents postes du tronçon supérieur et sont délivrés dans l'un d'une pluralité de postes 19 de réception alimentés sélectivement par le poste 18 de tri.

Dans l'exemple représenté, la chaîne sans fin 11 porte des réceptacles 20 et des rouleaux 21 interposés entre les réceptacles 20. Outre la chaîne sans fin 11, le dispositif est également doté de rails de guidage de la chaîne et/ou des réceptacles de convoyage 20 et/ou des rouleaux 21. Ainsi, les supports 22 sont avantageusement reçus et guidés en translation longitudinale dans un rail 26 définissant le tronçon supérieur.

Les caractéristiques générales d'une telle ligne de convoyage sont bien connues en elles-mêmes (cf. par exemple FR2960866, EP0580784, EP1689536...) de sorte que la suite de la description détaille principalement les caractéristiques propres à l'invention. Dans toute la suite, et dans tout le texte sauf indication contraire, chaque dispositif de transport est décrit en considérant qu'il se situe sur le tronçon supérieur 12, le réceptacle pouvant porter et transporter un objet. En particulier les termes « haut » et « bas » se réfèrent à une telle position.

Chaque support 22 forme un pied 25 supportant un réceptacle 20. Chaque support 22 porte ainsi un réceptacle 20 apte à recevoir et à porter au moins un objet tel qu'un fruit, et à le transporter le long dudit tronçon supérieur. Dans l'exemple représenté, le réceptacle 20 est un réceptacle individuel comprenant une coupelle 35 adaptée pour recevoir un unique objet. Cette coupelle 35 présente une forme creuse (à concavité orientée vers le haut au niveau du tronçon supérieur) conformée à celle de l'objet à transporter. Il peut s'agir notamment d'une main (à doigts 36 s'imbriquant entre des disques 38 de rouleaux 37 adjacents) comme représenté, d'un godet ou autre.

Chaque réceptacle 20 est monté sur un support 22 par un mécanisme de liaison agencé pour :
- solidariser le réceptacle et le support en translation longitudinale,
- permettre un basculement latéral du réceptacle 20 d'un côté ou de l'autre, en vue du déchargement latéral, en regard d'un poste de réception, de chaque objet porté par le réceptacle,
- et autoriser un déplacement relatif du réceptacle 20 en translation verticale par rapport au support 22 selon une course adaptée au pesage du réceptacle et de l'objet qu'il porte : vers le haut pour le déplacer d'une position basse de transport vers une position haute de pesée ; puis vers le bas à partir de la position haute de pesée de façon à n'induire aucune réaction verticale sur le réceptacle et à ne pas interférer avec la pesée.

Chaque réceptacle 20 et le support 22 sur lequel il est monté par ce mécanisme de liaison constitue un dispositif de transport individuel d'un objet. Le réceptacle 20 présente, sous la coupelle 35, une embase 23 assemblée et guidée par rapport au pied 25 d'un support, notamment pour pouvoir pivoter par rapport au support 22 d'un côté ou de l'autre selon un axe 24 de basculement parallèle à la direction longitudinale de la chaîne 11 sans fin, et pour pouvoir être déplacée verticalement entre la position basse de transport et la position haute de pesée. De préférence, l'axe 24 de basculement passe par un plan médian longitudinal vertical de la chaîne sans fin 11 qui est aussi un plan médian longitudinal du réceptacle 20. L'embase 23 du réceptacle 20 est globalement symétrique par rapport au plan médian longitudinal vertical passant par l'axe 24 de basculement. Il en va de même du pied 25 du support 22.

Dans l'exemple représenté, le pied 25 du support 22 est un flasque transversal vertical en forme générale de demi-disque à base diamétrale inférieure présentant :
- une gorge 45 supérieure centrale de verrouillage du réceptacle 20 en position basse centrée de transport, cette gorge 45 de verrouillage étant adaptée pour recevoir une nervure 46 centrale conjuguée du réceptacle 20 lorsque ce dernier est en position basse de transport, cette nervure 46 centrale s'étendant en saillie vers le bas en position centrale d'une paroi 47 de fond de gorge du réceptacle orientée vers le bas,
- deux fentes 50 verticales, l'une de chaque côté de la gorge 45 de verrouillage, traversant toute l'épaisseur du flasque, et recevant chacune une bille, dite bille 51 antéro-postérieure, pouvant se déplacer verticalement dans cette fente 50 en roulant sans glisser,
- des chants 52 supérieurs latéraux s'étendant latéralement vers l'extérieur au-delà de chaque fente 50 verticale et ayant, dans un plan transversal, une forme générale d'arc de cercle, pour le guidage du réceptacle 20 -notamment de sa nervure 46 centrale- glissant sur l'un de ces chants 52 supérieurs latéraux lors d'un basculement latéral du réceptacle 20,
- un logement 55 antérieur oblong verticalement, ménagé en creux dans une face 56 verticale transversale antérieure, orientée vers l'aval de la direction longitudinale d'entraînement, du flasque de façon à recevoir une bille 57 antérieure pouvant se déplacer verticalement en roulant sans glisser dans ce logement 55 antérieur,
- un logement 59 postérieur oblong verticalement, ménagé en creux dans une face 60 verticale transversale postérieure, orientée vers l'amont de la direction longitudinale d'entraînement, du flasque de façon à recevoir une bille 61 postérieure pouvant se déplacer de haut en bas en roulant sans glisser dans ce logement 59 postérieur,
- à l'amont du logement 55 antérieur, un téton 65 postérieur en saillie de la face 60 postérieure du flasque vers l'amont de la direction longitudinale d'entraînement pour pénétrer dans un logement 66 postérieur oblong verticalement, ménagé dans une paroi 68 verticale transversale postérieure de l'embase 23 du réceptacle 20 afin de former, avec la bille 57 antérieure, un guidage en rotation de basculement du réceptacle 20 par rapport au support 22 et à définir ledit axe 24 de basculement,

L'embase 23 du réceptacle 20 présente sous la coupelle 35 une gorge 70 verticale de réception du flasque du pied 25 du support 22. Cette gorge 70 verticale est formée entre une paroi 67 verticale transversale antérieure et ladite paroi 68 verticale transversale postérieure, et est délimitée vers le haut par ladite paroi 47 de fond de gorge orientée vers le bas.

Cette paroi 47 de fond de gorge présente une forme générale en portion de cercle de façon à recouvrir et suivre, lors d'un basculement latéral du réceptacle 20, les chants supérieurs 52 du flasque formant le pied 25, la nervure 46 en saillie vers le bas de cette paroi 47 de fond de gorge glissant au contact de l'un de ces chants supérieurs 52 de façon à guider le réceptacle 20 lors du basculement.

Le logement 55 antérieur solidaire du support 22 ménagé en creux dans la face antérieure 56 du flasque présente une forme pyramidale, avec deux flancs latéraux inclinés, un flanc supérieur incliné et un flanc inférieur incliné. Il est oblong pour s'étendre verticalement sur une hauteur supérieure au diamètre de la bille 57 antérieure. La largeur et la profondeur de ce logement 55 et l'inclinaison de ses flancs latéraux inclinés sont telles que la bille 57 antérieure est au contact de chacun des flancs latéraux inclinés de ce logement 55, bloquée latéralement par ces derniers, mais peut librement rouler sans glisser sur ces derniers lors des déplacements verticaux du réceptacle 20 par rapport au support 22.

La paroi 67 verticale transversale antérieure de l'embase 23 présente un logement 71 antérieur oblong verticalement, ménagé en creux dans la face verticale transversale postérieure, orientée vers l'amont, de cette paroi 67, ce logement 71 antérieur étant adapté pour recevoir la bille 57 antérieure, cette dernière étant interposée et emprisonnée entre ce logement 71 antérieur solidaire du réceptacle 20 et le logement 55 antérieur solidaire du support 22.

Le logement 71 antérieur solidaire du réceptacle 20 ménagé en creux dans la paroi 67 verticale transversale antérieure de la gorge 70 de l'embase 23 présente aussi une forme pyramidale, avec deux flancs latéraux inclinés, un flanc supérieur incliné et un flanc inférieur incliné. Il est oblong pour s'étendre verticalement sur une hauteur supérieure au diamètre de la bille 57 antérieure. La largeur et la profondeur de ce logement 71 et l'inclinaison de ses flancs latéraux inclinés sont telles que la bille 57 antérieure est au contact de chacun des flancs latéraux inclinés de ce logement 71, bloquée latéralement par ces derniers, mais peut librement rouler sans glisser sur ces derniers lors des déplacements verticaux du réceptacle 20 par rapport au support 22. Le logement 71 antérieur peut être borgne ou pour partie traversant l'épaisseur de la paroi 67 verticale en débouchant sur la face antérieure orientée vers l'aval de cette paroi 67 verticale, une lumière oblongue verticale étant alors formée sur cette face.

La bille 57 antérieure peut rouler sans glisser sur les flancs latéraux inclinés des logements 55, 71, qui constituent des portées du réceptacle 20 et du support 22 permettant un guidage vertical du réceptacle 20 par rapport au support 22. En outre la bille 57 antérieure en contact avec les flancs latéraux inclinés des deux logements 55, 71 en regard l'un de l'autre réalise un blocage en translation latérale du réceptacle 20 par rapport au support 22 en toute position verticale du réceptacle 20, y compris en position haute de pesée. Mais la bille 57 antérieure en contact avec les flancs latéraux inclinés des deux logements 55, 71 en regard l'un de l'autre forme un pivot autorisant la rotation du réceptacle 20 par rapport au support 22 en vue du basculement latéral. Ce pivot est aussi formé du côté postérieur par le téton 65 qui s'engage dans le logement 66 postérieur, oblong verticalement, ménagé en creux vers l'amont dans la paroi 68 postérieure de l'embase 23 pour recevoir ce téton 65. La hauteur de ce logement 66 postérieur correspond à celle du logement 71 antérieur de la paroi 67 verticale transversale antérieure de l'embase 23, de façon à permettre les déplacements en translation verticale du réceptacle 20 et du support 22, d'une part pour que la nervure 46 centrale de l'embase 23 puisse sortir de la gorge 45 de verrouillage du pied 25 ; d'autre part pour pouvoir déplacer le réceptacle 20 verticalement vers le haut par rapport au support 22 depuis sa position basse de transport jusqu'en position haute de pesée comme expliqué ci-après.

Le logement 59 postérieur du flasque du pied 25 est situé au-dessus du téton 65 et est suffisamment profond pour loger la bille 61 postérieure, cette dernière pouvant venir au contact de la face antérieure, plane, de la paroi 68 postérieure de l'embase 23 pour pouvoir rouler sans glisser sur cette face antérieure tant lors des déplacements verticaux du réceptacle 20 que lors de son basculement. Cette bille 61 postérieure sert notamment à stabiliser le réceptacle 20 lors du pesage en cas de déséquilibre de ce dernier vers l'aval, et ne doit pas gêner ni limiter le basculement latéral du réceptacle 20. Un léger jeu longitudinal est donc de préférence prévu dans le logement 59 postérieur pour permettre la rotation de la bille 61 postérieure dans ce logement 59 postérieur. Pour ce faire, l'écartement longitudinal entre le fond de ce logement 59 postérieur et la face antérieure de la paroi 68 postérieure de l'embase 23 est légèrement supérieur (d'une valeur non nulle mais aussi faible que possible, typiquement inférieure à 1 mm) au diamètre de la bille 61 postérieure. La bille 61 postérieure peut aussi faire office de butée de fin de course du basculement latéral du réceptacle 20 si la paroi 68 postérieure de l'embase 23 est dotée de nervures (non représentées) en saillie vers l'aval venant buter contre cette bille 61 postérieure en fin de course de basculement.

Les fentes 50 verticales du flasque du pied 25 support 22 sont écartées latéralement l'une de l'autre et symétriques l'une de l'autre par rapport à un plan vertical longitudinal médian de ce pied 25. Les deux fentes 50 verticales s'étendent dans un même plan transversal et en partie haute du flasque du pied 25.

La face verticale transversale libre postérieure de la paroi 67 antérieure de l'embase 23 du réceptacle 20 s'étend devant les fentes 50 verticales et présente une portée 73 verticale antérieure contre laquelle la bille 51 antéro-postérieure de chacune de ces fentes 50 verticales peut venir en butée et sur laquelle cette bille 51 antéro-postérieure peut rouler sans glisser. La face verticale transversale libre antérieure de la paroi 68 postérieure de l'embase 23 du réceptacle 20 s'étend derrière les fentes 50 verticales et présente une portée 74 verticale postérieure contre laquelle la bille 51 antéro-postérieure de chacune de ces fentes 50 verticales peut venir en butée et sur laquelle cette bille 51 antéro-postérieure peut rouler sans glisser. Chaque bille 51 antéro-postérieure est prisonnière de la fente 50 verticale et présente un diamètre supérieur à l'épaisseur de cette fente 50 verticale dans la direction longitudinale de façon à pouvoir venir au contact de l'une de ces portées 73, 74 verticales antérieure et postérieure. L'écartement longitudinal des portées 73, 74 verticales antérieure et postérieure des parois 67, 68 antérieure et postérieure de l'embase 23 du réceptacle 20 est supérieur au diamètre de la bille 51 antéro-postérieur de sorte qu'à chaque instant cette bille 51 est au contact de l'une seulement de ces portées 73, 74 de l'embase 23 et peut rouler sans glisser sur cette dernière. Là encore, le jeu longitudinal ménagé entre chaque bille 51 antéro-postérieure et les portées 73, 74 verticales antérieure et postérieure des parois 67, 68 antérieure et postérieure de l'embase 23 est non nul et aussi faible que possible, typiquement inférieur à 1 mm, pour permettre le roulement sans glissement de la bille 51 antéro-postérieure. Chaque portée 73, 74 verticale antérieure et postérieure peut être simplement plane, ou formée d'un léger renfoncement en creux dans la paroi 67, 68 correspondante pour réaliser un maintien du réceptacle 20 en rotation autour de l'axe 24 de basculement, maintien susceptible d'être surpassé par la commande en basculement latéral du réceptacle 20.

Chaque fente 50 verticale présente des flancs 53 verticaux en regard ayant en section droite horizontale une forme générale en V conjuguée à la courbure et à la dimension de la bille 51 antéro-postérieure, de façon à retenir cette bille 51 antéro-postérieure dans la fente 50 verticale dans la direction longitudinale, tout en formant des pistes plates de roulement avec un minimum de contact et de friction pour cette bille. L'extrémité supérieure libre de chaque fente 50 verticale débouchant au niveau du chant 52 supérieur du flasque du pied 25 est de préférence dotée d'un ergot 54 de rétrécissement, d'un côté au moins, pour empêcher la sortie vers le haut de la bille 51 antéro-postérieure hors de la fente 50 verticale, tout en permettant son insertion dans la fente 50 verticale lors du montage par déformation élastique en force de l'ergot 54 de rétrécissement.

L'assemblage d'un réceptacle 20 sur le support 22 d'un dispositif selon le mode de réalisation représenté sur les figures peut être effectué de la façon suivante. Le support 22 étant placé avec le flasque du pied 25 s'étendant horizontalement et vers le haut (direction longitudinale orientée à la verticale) on place la bille 61 postérieure dans le logement 59 postérieur du pied 25, la bille 57 antérieure dans le logement 71 antérieur de l'embase 23 et on engage le flasque du pied 25 dans la gorge 70 de l'embase 23 en insérant en force le téton 65 dans le logement 66 postérieur, par déformation élastique. Pour faciliter cet engagement élastique, le téton 65 présente avantageusement un pan 69 incliné supérieur et la paroi 68 postérieure de l'embase 23 présente également un pan incliné 72 coopérant avec le pan 69 inclinée du téton 65. Le téton 65 permet ainsi de verrouiller l'embase 23 du réceptacle 20 sur le pied 25 du support 22. On insère ensuite les billes 51 antéro-postérieures dans chaque fente 50 verticale après avoir basculé latéralement le réceptacle 20 pour dégager l'ouverture supérieure de chacune de ces fentes 50 verticales. La paroi 67 antérieure de l'embase 23 présente également avantageusement un pan incliné 78 coopérant avec la bille 57 antérieure pour l'engagement de l'embase 23 sur le pied 25 si cette bille 57 antérieure a été préalablement placée dans le logement 55 antérieur du pied 25.

L'embase 23 présente aussi deux pattes 75 latérales s'étendant de chaque côté de cette dernière vers le bas pour présenter des extrémités libres inférieures formant des talons 76 de basculement aptes à coopérer avec une came77 de basculement solidaire d'une tige rotative d'un électroaimant 79 solidaire du bâti 10 du dispositif de convoyage, de façon à entraîner le basculement du réceptacle 20 autour de l'axe 24 de basculement en vue du déchargement latéral de l'objet vers un poste de réception. Tant qu'il n'est pas alimenté, l'électroaimant 79 maintient la came 77 en position inactive dans laquelle elle n'interfère pas avec le talon 49, 50 des réceptacles 20.

La gorge 70 est avantageusement ouverte vers le haut sur les côtés comme dans l'exemple représenté à des fins d'allégement du réceptacle 20. Elle peut aussi bien être fermée à son extrémité supérieure et jusqu'aux pattes latérales, ce qui présente alors l'avantage de protéger le mécanisme de liaison et les billes des éclaboussures et salissures notamment en provenance de la coupelle 35.

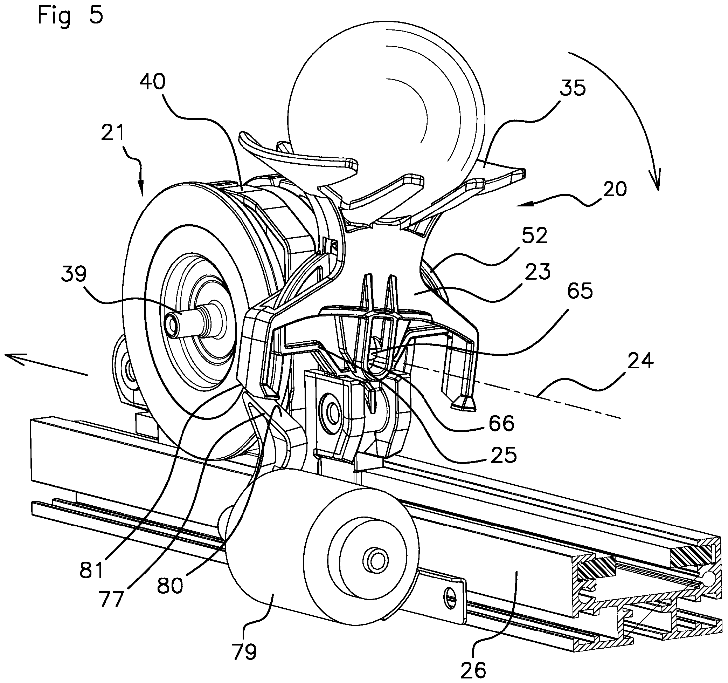

Dans l'exemple de réalisation représenté figure 5, la came 77 est en position active dans un plan vertical. En position inactive la came 77 s'étend dans un plan horizontal éloigné du talon 76 de façon à ne pas interférer avec ce dernier. Lorsqu'il est alimenté, l'électroaimant 79 place la came 77 en position active verticale, de sorte que cette came 77 présente une rampe 80 inclinée par rapport à la direction longitudinale et au contact de laquelle vient le talon 76 d'un réceptacle 20 du fait de son déplacement longitudinal. Ce faisant, la came 77 repousse le talon, ce qui fait basculer le réceptacle 20 en dégageant la nervure 46 hors de la gorge 45 de verrouillage, suite à quoi le réceptacle 20 continue de basculer sous l'effet de son propre poids autour de l'axe 24 de basculement. Le talon 76 présente avantageusement un pan incliné 81 antérieur orienté vers l'aval pour coopérer avec une rampe inclinée d'une came 77.

Un électroaimant 79 est prévu au regard de chaque poste de réception 19 de façon à permettre la commande du basculement des réceptacles 20 en regard de l'un ou l'autre de chacun de ces postes de réception 19, selon le résultat de l'analyse optique et du pesage préalablement réalisés. Les électroaimants 79 des différents postes de réception 19 peuvent être disposés alternativement d'un côté et de l'autre de la ligne de convoyage, les réceptacles 20 basculant d'un côté ou de l'autre, selon le poste de réception 19 à alimenter.

Les talons 76 des pattes 75 latérales du réceptacle 20 servent également au pesage de ce dernier. Ce pan incliné 81 est prolongé vers l'amont par un pan 82 horizontal de pesée agencé pour pouvoir venir sur une glissière 83 de pesée s'étendant sur le côté de la chaîne sans fin 11 au niveau du poste de pesage 17. Pour ce faire, chaque talon 76 est prolongé vers l'amont du pan incliné 81 antérieur par un pan 82 horizontal postérieur de pesage, les deux pans 82 horizontaux du réceptacle 20 étant strictement dans le même plan horizontal lorsque le réceptacle 20 est en position basse de transport. Le poste de pesage 17 présente des glissières 83 latérales de pesée présentant chacune une portion 84 inclinée vers le haut vers l'aval sur laquelle un pan 81 incliné antérieur vient glisser pour entraîner le réceptacle 20 en translation verticale vers le haut jusqu'à sa position haute de pesée. La portion 84 inclinée de chaque glissière 83 latérale de pesée est prolongée par une portion 85 horizontale sur laquelle le pan 82 horizontal du talon 76 vient glisser au fur et à mesure du déplacement de la chaîne sans fin dans la direction longitudinale d'entraînement. Les portions horizontales 85 des deux glissières 83 sont à la même hauteur et sont reliées à une cellule 86 de pesage disposée sous le rail horizontal du tronçon 12 aller supérieur de la chaîne sans fin. De la sorte, le poids du réceptacle 20 et de l'objet qu'il transporte est transmis via les pattes 75 et les talons 76 du réceptacle 20 aux glissières 83 latérales de pesée et à la cellule 86 de pesage. Dans cette position haute de pesée, le réceptacle 20 n'est soumis à aucune réaction verticale de la part du mécanisme de liaison de ce réceptacle 20 au support 22, et ce grâce au fait que ce mécanisme de liaison ne relie le support 22 au réceptacle 20 que par l'intermédiaire des billes 51, 57, 61. Il en résulte une pesée parfaitement précise et fidèle.

Il est à noter que le pan 82 horizontal de pesée du talon 76 est décalé vers l'amont par rapport au centre de gravité du réceptacle 20, de sorte que ce dernier a tendance à basculer vers l'aval lorsqu'il est en position haute de pesée, ce qui permet de rattraper les jeux longitudinaux, la paroi 68 postérieure de l'embase 23 venant au contact des billes 51 antéro-postérieures et de la bille 61 postérieure. En outre, en variante non représentée, chaque pan 82 horizontal de pesée peut avantageusement présenter une nervure longitudinale en saillie vers le bas ou un ergot central en saillie vers le bas permettant d'une part de faciliter le glissement de ce pan 82 horizontal de pesée sur la glissière 83 de pesée et d'augmenter la précision du pesage en évitant tout décalage du contact entre le pan 82 horizontal de pesée et la glissière 83 de pesée.

Chaque rouleau 21 est formé d'une pluralité de disques 38 parallèles coaxiaux montés en rotation sur un arbre 39 transversal guidé en rotation libre et en translation verticale par rapport au support 22. Pour ce faire le support 22 comporte une chape 40 présentant une fente verticale 41 recevant l'arbre 39 transversal.

Les disques 38 peuvent passer dans les espaces ménagés entre les doigts 36 des mains 35. Les disques 38 ont des formes et/ou dimensions adaptées pour former un logement de réception d'un objet entre deux rouleaux adjacents. Il peut s'agir par exemple de troncs de cône (le rouleau étant un bicône ou diabolo pour épouser la surface externe d'un objet reçu entre deux rouleaux 21 adjacents) et/ou de disques cylindriques. Chaque rouleau 21 peut présenter une paire de disques ou un nombre de disques supérieur à deux, notamment trois disques comme dans l'exemple représenté (deux disques externes de plus grand diamètre en forme générale de cônes et un disque interne central de plus faible diamètre). Les rouleaux 21 sont adaptés pour pouvoir rouler sur des rails du bâti du dispositif et/ou pour pouvoir être entraînés en rotation par des courroies venant en contact avec ces rouleaux.

Les disques 38 sont en matériau adapté pour pouvoir venir au contact avec un objet tel qu'un fruit, le supporter sans risquer de l'endommager, et l'entraîner en rotation lorsque le rouleau est entraîné en rotation par des courroies au niveau du poste d'analyse optique 16 doté d'au moins une caméra 28 de prise de vues, reliée à une unité informatique (non représentée). Ainsi, les objets reçus entre les rouleaux 21 peuvent, lorsqu'ils sont portés par ces derniers, être entraînés en rotation propre de façon à permettre l'analyse optique de leurs différentes faces externes. Les disques 38 peuvent être au moins pour partie solidaires en rotation les uns des autres et/ou au moins pour partie indépendants en rotation les uns des autres, de sorte qu'il est possible d'entraîner des disques d'un même rouleau 21 à des vitesses différentes, voire en sens inverses.

À l'amont du poste d'analyse optique 16, les rouleaux 21 sont déplacés vers le haut grâce à des rampes 90 inclinée coopérant avec les disques 38 externes ou avec des extensions latérales de l'arbre 39 des rouleaux 21. Dans l'exemple de la figure 1 ces rampes 90 sont placées en fin du tronçon 12 aller supérieur, les rouleaux 21 étant bloqués (par exemple par un ergot de blocage élastique de la chape coopérant avec l'arbre de rotation) dans cette position sur le tronçon 13 retour jusqu'à leur retour au poste 16 d'analyse optique. Dans cette position des rouleaux 21 sur le tronçon aller, les objets sont supportés par les rouleaux 21, et non par les réceptacles 20 qui sont à un niveau inférieur, les objets ne venant pas au contact de ces réceptacles. Lors du passage au poste d'analyse optique 16, les rouleaux 21 sont entraînés en rotation par des courroies 91 qui sont elles-mêmes entraînées en déplacement par un dispositif motorisé et qui coopèrent avec les disques 38 externes, de plus grand diamètre, des rouleaux 21 ou avec des extensions latérales de l'arbre 39 des rouleaux 21.

À l'aval du poste d'analyse optique 16, les rouleaux 21 se déplacent verticalement vers le bas, jusqu'à leur position inférieure. Ce faisant, les objets qui étaient supportés entre les rouleaux 21 se trouvent posés sur les coupelles 35 des réceptacles 20, et supportés par ces derniers.

À la sortie du poste de pesée 17, le poste de tri 18 entraîne un déchargement des objets dans l'un ou l'autre des postes 19 de réception prévus à cet effet, selon des critères prédéterminés et en fonction des résultats de l'analyse optique et du pesage. À noter qu'un seul poste 19 de réception est représenté figure 1 mais que le dispositif de convoyage comprend en général plusieurs postes de réception juxtaposés le long du tronçon aller 12 pour réaliser le tri des objets. Le déchargement est réalisé par basculement du réceptacle 20 portant un objet autour de l'axe 24 de basculement, par actionnement d'un électroaimant 79 venant placer une came 77 de déchargement sur le trajet du talon 76 approprié comme décrit ci-dessus.

Un dispositif de transport selon l'invention formé d'un réceptacle 20 assemblé sur son support 22 présente un faible nombre de pièces, à savoir le support 22, le réceptacle 20, un rouleau 21, et quatre billes, c'est-à-dire au total sept pièces dans le mode de réalisation représenté sur les figures. Chacune de ces pièces peut être formée en matière synthétique moulée, avec éventuellement des inserts métalliques de renfort. Le guidage du réceptacle 20 par rapport au support 22 est particulièrement efficace, précis, simple, et compatible avec une pesée précise et fidèle des objets transportés.

L'invention peut faire l'objet de nombreuses variantes de réalisation par rapport au seul mode de réalisation décrit ci-dessus et représenté sur les figures. En particulier, le nombre et la disposition des billes peuvent être différents. En outre, dans le mécanisme de liaison du mode de réalisation représenté sur les figures et décrit ci-dessus, l'embase 23 du réceptacle 20 vient coiffer le flasque vertical du pied 25 du support 22. Rien n'empêche au contraire de prévoir que l'embase du réceptacle soit insérée à l'intérieur d'une gorge ménagée dans le pied du support 22. De même, il est possible de prévoir que l'axe de basculement du réceptacle par rapport au support soit fixe par rapport au support et non mobile en translation verticale avec le réceptacle comme dans le mode de réalisation représenté sur les figures et décrit ci-dessus. De nombreuses autres variantes de réalisation du mécanisme de liaison sont envisageables, dès lors que ce dernier comprend au moins une bille interposée entre des portées verticales du réceptacle et du support pour guider le réceptacle en translation verticale, et éviter toute transmission d'une réaction du support vers le réceptacle en position haute de pesée.

L'invention s'applique également à d'autres objets que des fruits ou légumes et à d'autres dispositifs de convoyage et de pesée d'objets que des dispositifs de tri.

## Revendications

1. Dispositif de transport d'objets comprenant un réceptacle (20) apte à recevoir au moins un objet, un support (22) adapté pour pouvoir être associé à un dispositif d'entraînement selon une direction, dite direction longitudinale d'entraînement, et un mécanisme de liaison du réceptacle au support, ce mécanisme de liaison étant agencé pour :
- solidariser le réceptacle et le support en translation longitudinale,
- permettre un basculement latéral du réceptacle (20) en vue du déchargement latéral de chaque objet porté par le réceptacle,
- et autoriser un déplacement relatif du réceptacle (20) en translation verticale par rapport au support (22) selon une course adaptée au pesage du réceptacle et du(des) objet(s) qu'il porte,
**caractérisé en ce que** ledit mécanisme de liaison comprend au moins une bille interposée et emprisonnée entre au moins une portée du réceptacle et au moins une portée du support pour pouvoir rouler sans glisser verticalement sur au moins l'une de ces portées.

2. Dispositif selon la revendication 1, **caractérisé en ce qu'**au moins une portée du réceptacle (20) est une portée verticale au moins pour partie transversale.

3. Dispositif selon l'une quelconque des revendications 1 ou 2, **caractérisé en ce qu'**au moins une portée du support (22) est une portée verticale au moins pour partie transversale.

4. Dispositif selon l'une quelconque des revendications 1 à 3, **caractérisé en ce que** le mécanisme de liaison d'une paire de pièces formée d'un réceptacle (20) et d'un support (22) présente :
- une portée verticale antérieure et une portée verticale postérieure de l'une de ces deux pièces, ces portées verticales antérieure et postérieure étant écartées l'une de l'autre selon la direction longitudinale,
- au moins une bille, dite bille (51) antéro-postérieure, prisonnière d'une fente (50) verticale de l'autre pièce traversant l'épaisseur de cette dernière dans la direction longitudinale, cette bille antéro-postérieure présentant un diamètre inférieur à l'écartement desdites portées verticales antérieure et postérieure, et supérieur à l'épaisseur de ladite fente verticale dans la direction longitudinale de façon à pouvoir venir au contact de l'une des portées verticales antérieure et postérieure.

5. Dispositif selon la revendication 4, **caractérisé en ce qu'**il comporte deux fentes (50) verticales écartées latéralement l'une de l'autre comprenant chacune au moins une bille (51) antéro-postérieure.

6. Dispositif selon la revendication 5, **caractérisé en ce que** les deux fentes (50) verticales s'étendent dans même plan transversal et en partie haute de ladite autre pièce.

7. Dispositif selon l'une quelconque des revendications 1 à 6, **caractérisé en ce que** le mécanisme de liaison d'une paire de pièces formée d'un réceptacle (20) et d'un support (22) présente au moins une bille (57) antérieure interposée et emprisonnée entre au moins une portée antérieure du réceptacle (20) et au moins une portée antérieure du support (22) pour pouvoir rouler sans glisser verticalement sur et entre ces portées antérieures.

8. Dispositif selon l'une quelconque des revendications 1 à 7, **caractérisé en ce que** le mécanisme de liaison d'une paire de pièces formée d'un réceptacle et d'un support présente au moins une bille (61) postérieure interposée et emprisonnée entre au moins une portée postérieure du réceptacle (20) et au moins une portée postérieure du support (22) pour pouvoir rouler sans glisser verticalement sur et entre ces portées postérieures.

9. Dispositif selon l'une quelconque des revendications 1 à 8, **caractérisé en ce que** le mécanisme de liaison d'une paire de pièces formée d'un réceptacle (20) et d'un support (22) comprend un pivot à axe longitudinal permettant un basculement latéral du réceptacle (20) d'un côté au moins du support (22) en vue du déchargement des objets.

10. Dispositif selon la revendication 9, **caractérisé en ce que** ledit pivot longitudinal est au moins pour partie formé d'une bille (57) interposée entre une portée verticale du réceptacle (20) orientée vers l'amont de la direction longitudinale d'entraînement et une portée verticale du support (22) orientée vers l'aval de la direction longitudinale d'entraînement.

11. Dispositif selon l'une quelconque des revendications 1 à 10, **caractérisé en ce que** le mécanisme de liaison est adapté pour permettre un basculement du réceptacle (20) de chaque côté du support (22).

12. Dispositif selon l'une quelconque des revendications 1 à 11, **caractérisé en ce que** chaque réceptacle (20) est une coupelle adaptée pour recevoir individuellement un objet.

13. Dispositif de convoyage et de pesée d'objets comprenant :
- une chaîne (11) sans fin présentant un tronçon supérieur horizontal,
- un dispositif d'entraînement à défilement continu de la chaîne sans fin selon une direction longitudinale d'entraînement dudit tronçon supérieur,
- des dispositifs de transport d'objets répartis le long de la chaîne sans fin, portés par cette dernière et solidaires en translation de cette dernière, chaque dispositif de transport comprenant un réceptacle (20) apte à recevoir au moins un objet, un support (22) relié au dispositif d'entraînement pour être entraîné par ce dernier selon la direction longitudinale d'entraînement, et un mécanisme de liaison du réceptacle (20) au support (22), ce mécanisme de liaison étant agencé pour :
∘ solidariser le réceptacle (20) et le support (22) en translation longitudinale,
∘ permettre un basculement latéral du réceptacle (20) par rapport au support (22) en vue du déchargement latéral de chaque objet porté par le réceptacle,
∘ et autoriser un déplacement relatif du réceptacle (20) vers le haut par rapport au support (22) selon une course adaptée au pesage du réceptacle et du(des) objet(s) qu'il porte,
- au moins un poste (17) de pesée comprenant, sur ledit tronçon supérieur de la chaîne sans fin :
∘ au moins une glissière agencée le long d'une portion dudit tronçon supérieur de la chaîne sans fin pour pouvoir coopérer avec les réceptacles (20) de façon à les déplacer par rapport aux supports (22) verticalement vers le haut en position haute de pesée,
∘ et au moins un dispositif (83,86) de pesage des réceptacles en position haute de pesée,
**caractérisé en ce que** chaque dispositif de transport d'objets est un dispositif selon l'une quelconque des revendications 1 à 12.

14. Dispositif selon la revendication 13, **caractérisé en ce que** chaque réceptacle (20) est interposé sur la chaîne (11) sans fin entre deux rouleaux (21) montés librement rotatifs autour d'axes de rotation transversaux entraînés en translation selon la direction longitudinale par ladite chaîne (11) sans fin.

15. Dispositif selon la revendication 14, **caractérisé en ce que** ladite chaîne (11) sans fin est formée par les supports (22) des dispositifs de transport articulés les uns aux autres deux à deux successivement dans la direction longitudinale, chaque support (22) formant ainsi un maillon de la chaîne, et **en ce que** chaque support (22) d'un dispositif de transport porte un réceptacle (20) et un rouleau (21) adjacent.

## Patentansprüche

1. Vorrichtung zum Transportieren von Gegenständen, umfassend einen Behälter (20), der in der Lage ist, mindestens einen Gegenstand aufzunehmen, einen Träger (22), der dafür geeignet ist, mit einer Vorrichtung zum Antreiben entlang einer Längsantriebsrichtung genannten Richtung verknüpft werden zu können, und einen Mechanismus zum Verbinden des Behälters mit dem Träger, wobei dieser Verbindungsmechanismus dafür eingerichtet ist:
- den Behälter und den Träger in Längstranslation fest miteinander zu verbinden,
- ein seitliches Kippen des Behälters (20) im Hinblick auf das seitliche Entladen jedes Gegenstands, der vom Behälter getragen wird, zu ermöglichen,
- und eine relative Bewegung des Behälters (20) in Bezug auf den Träger (22) in Vertikaltranslation entlang eines Hubes zu gestatten, der für das Wiegen des Behälters und des Gegenstands/der Gegenstände, den/die derselbe trägt, geeignet ist,
**dadurch gekennzeichnet, dass** der Verbindungsmechanismus mindestens eine Kugel umfasst, die zwischen mindestens einer Spannweite des Behälters und mindestens einer Spannweite des Trägers eingefügt und eingesperrt ist, um ohne zu rutschen vertikal auf mindestens einer dieser Spannweiten rollen zu können.

2. Vorrichtung nach Anspruch 1, **dadurch gekennzeichnet, dass** mindestens eine Spannweite des Behälters (20) eine vertikale, mindestens zum Teil quer verlaufende Spannweite ist.

3. Vorrichtung nach einem der Ansprüche 1 oder 2, **dadurch gekennzeichnet, dass** mindestens eine Spannweite des Trägers (22) eine vertikale, mindestens zum Teil quer verlaufende Spannweite ist.

4. Vorrichtung nach einem der Ansprüche 1 bis 3, **dadurch gekennzeichnet, dass** der Mechanismus zum Verbinden eines Bauteilpaares, das von einem Behälter (20) und einem Träger (22) gebildet wird, aufweist:
- eine vordere vertikale Spannweite und eine hintere vertikale Spannweite eines dieser zwei Bauteile, wobei diese vordere und hintere vertikale Spannweite entlang der Längsrichtung voneinander beabstandet sind,
- mindestens eine Kugel, vordere/hintere Kugel (51) genannt, die in einem vertikalen Schlitz (50) des anderen Bauteils, der in der Längsrichtung durch die Dicke dieses letzteren hindurchgeht, eingesperrt ist, wobei diese vordere/hintere Kugel einen Durchmesser aufweist, der kleiner ist als die Beabstandung der vorderen und hinteren vertikalen Spannweite und größer als die Dicke des vertikalen Schlitz in der Längsrichtung, um mit einer aus der vorderen und hinteren vertikalen Spannweite in Berührung kommen zu können.

5. Vorrichtung nach Anspruch 4, **dadurch gekennzeichnet, dass** sie zwei seitlich voneinander beabstandete vertikale Schlitze (50) umfasst, die jeder mindestens eine vordere/hintere Kugel (51) umfassen.

6. Vorrichtung nach Anspruch 5, **dadurch gekennzeichnet, dass** sich die zwei vertikalen Schlitze (50) in selber Querebene und im oberen Bereich des anderen Teils erstrecken.

7. Vorrichtung nach einem der Ansprüche 1 bis 6, **dadurch gekennzeichnet, dass** der Mechanismus zum Verbinden eines von einem Behälter (20) und einem Träger (22) gebildeten Bauteilpaares mindestens eine vordere Kugel (57) umfasst, die zwischen mindestens einer vorderen Spannweite des Behälters (20) und mindestens einer vorderen Spannweite des Trägers (22) eingefügt und eingesperrt ist, um ohne zu rutschen vertikal auf und zwischen diesen vorderen Spannweiten rollen zu können.

8. Vorrichtung nach einem der Ansprüche 1 bis 7, **dadurch gekennzeichnet, dass** der Mechanismus zu Verbinden eines von einem Behälter und einem Träger gebildeten Bauteilpaares mindestens eine hintere Kugel (61) aufweist, die zwischen mindestens einer hinteren Spannweite des Behälters (20) und mindestens einer hinteren Spannweite des Trägers (22) eingefügt und eingesperrt ist, um ohne zu rutschen vertikal auf und zwischen diesen hinteren Spannweiten rollen zu können.

9. Vorrichtung nach einem der Ansprüche 1 bis 8, **dadurch gekennzeichnet, dass** der Mechanismus zum Verbinden eines von einem Behälter (20) und einem Träger (22) gebildeten Bauteilpaares einen Zapfen mit Längsachse umfasst, der ein seitliches Kippen des Behälters (20) auf mindestens eine Seite des Trägers (22) im Hinblick auf das Entladen der Gegenstände ermöglicht.

10. Vorrichtung nach Anspruch 9, **dadurch gekennzeichnet, dass** der Längszapfen mindestens zum Teil von einer Kugel (57) gebildet wird, die zwischen einer vertikalen Spannweite des Behälters (20), die zur stromaufwärtigen Seite der Längsantriebsrichtung hin ausgerichtet ist, und einer vertikalen Spannweite des Trägers (22) eingefügt ist, die zur stromabwärtigen Seite der Längsantriebsrichtung hin ausgerichtet ist.

11. Vorrichtung nach einem der Ansprüche 1 bis 10, **dadurch gekennzeichnet, dass** der Verbindungsmechanismus dafür geeignet ist, ein Kippen des Behälters (20) auf jede Seite des Trägers (22) zu ermöglichen.

12. Vorrichtung nach einem der Ansprüche 1 bis 11, **dadurch gekennzeichnet, dass** jeder Behälter (20) eine Schale ist, die dafür geeignet ist, einen Gegenstand einzeln aufzunehmen.

13. Vorrichtung zum Befördern und Wiegen von Gegenständen, umfassend:
- eine Endloskette (11), die ein oberes horizontales Teilstück aufweist,
- eine Vorrichtung zum Antreiben der Endloskette mit kontinuierlichem Durchlauf entlang einer Längsantriebsrichtung des oberen Teilstücks,
- Vorrichtungen zum Transportieren von Gegenständen, die entlang der Endloskette verteilt sind, die von dieser letzteren getragen werden und in Translation fest mit dieser letzteren verbunden sind, wobei jede Transportvorrichtung einen Behälter (20) umfasst, der in der Lage ist, mindestens einen Gegenstand aufzunehmen, einen Träger (22), der mit der Antriebsvorrichtung verbunden ist, um von dieser letzteren entlang der Längsantriebsrichtung angetrieben zu werden, und einen Mechanismus zum Verbinden des Behälters (20) mit dem Träger (22), wobei dieser Verbindungsmechanismus dafür eingerichtet ist:
-- den Behälter (20) und den Träger (22) in Längstranslation fest miteinander zu verbinden,
-- ein seitliches Kippen des Behälters (20) in Bezug auf den Träger (22) im Hinblick auf das seitliche Entladen jedes Gegenstands, der vom Behälter getragen wird, zu ermöglichen,
-- und eine relative Bewegung des Behälters (20) in Bezug auf den Träger (22) entlang eines Hubes nach oben zu gestatten, der für das Wiegen des Behälters und des Gegenstands/der Gegenstände, den/die derselbe trägt, geeignet ist,
- mindestens eine Wiegestation (17), die am oberen Teilstück der Endloskette umfasst:
-- mindestens einen Schlitten, der entlang eines Abschnitts des oberen Teilstücks der Endloskette eingerichtet ist, um mit den Behältern (20) zusammenwirken zu können, um dieselben in Bezug auf die Träger (22) vertikal nach oben in obere Wiegestellung zu bewegen,
-- und mindestens eine Vorrichtung (83, 86) zum Wiegen der Behälter in oberer Wiegestellung,
**dadurch gekennzeichnet, dass** jede Vorrichtung zum Transportieren von Gegenständen eine Vorrichtung nach einem der Ansprüche 1 bis 12 ist.

14. Vorrichtung nach Anspruch 13, **dadurch gekennzeichnet, dass** jeder Behälter (20) auf der Endloskette (11) zwischen zwei Rollen (21) eingefügt ist, die frei um quer verlaufende Drehachsen herum drehend montiert sind, welche von der Endloskette (11) in Translation entlang der Längsrichtung angetrieben werden.

15. Vorrichtung nach Anspruch 14, **dadurch gekennzeichnet, dass** die Endloskette (11) von den Trägern (22) der Transportvorrichtungen gebildet wird, die zweierweise hintereinander in der Längsrichtung aneinander angelenkt sind, wobei jeder Träger (22) so eine Masche der Kette bildet, und dadurch, dass jeder Träger (22) einer Transportvorrichtung einen Behälter (20) und eine angrenzende Rolle (21) trägt.

## Claims

1. Object transporting device comprising a receptacle (20) suitable for receiving at least one object, a support (22) which can to be associated with a driving device for driving along a direction, named the longitudinal driving direction, and a connecting mechanism for connecting the receptacle to the support, this connecting mechanism being configured to:
- interlock the receptacle and the support in longitudinal translation,
- permit a lateral tilting of the receptacle (20) for the purpose of laterally discharging each object carried by the receptacle,
- and allow a relative displacement of the receptacle (20) in vertical translation with respect to the support (22) with a stroke adapted for the weighing of the receptacle and of the object(s) which it carries,
**characterised in that** said connecting mechanism comprises at least one ball interposed and imprisoned between at least one bearing surface of the receptacle and at least one bearing surface of the support in order to be able to roll without sliding vertically on at least one of these bearing surfaces.

2. Device according to claim 1, **characterised in that** at least one bearing surface of the receptacle (20) is a vertical, at least partly transverse bearing surface.

3. Device according to any one of claims 1 or 2, **characterised in that** at least one bearing surface of the support (22) is a vertical, at least partly transverse bearing surface.

4. Device according to any one of claims 1 to 3, **characterised in that** the connecting mechanism for connecting a pair of parts formed of a receptacle (20) and of a support (22) has:
- a front vertical bearing surface and a rear vertical bearing surface of one of these two parts, these front and rear vertical bearing surfaces being spaced from one another along the longitudinal direction,
- at least one ball, named anteroposterior ball (51), enclosed in a vertical slot (50) of the other part passing through the thickness of the latter in the longitudinal direction, this anteroposterior ball having a diameter less than the spacing of said front and rear vertical bearing surfaces, and greater than the thickness of said vertical slot in the longitudinal direction so as to be able to come into contact with one of the front and rear vertical bearing surfaces.

5. Device according to claim 4, **characterised in that** it has two vertical slots (50) spaced laterally from one another, each comprising at least one anteroposterior ball(51).

6. Device according to claim 5, **characterised in that** the two vertical slots (50) extend in a same transverse plane and at the top part of said other part.

7. Device according to any one of claims 1 to 6, **characterised in that** the connecting mechanism for connecting a pair of parts formed of a receptacle (20) and of a support (22) has at least one front ball (57) interposed and imprisoned between at least one front bearing surface of the receptacle (20) and at least one front bearing surface of the support (22) in order to be able to roll without sliding vertically on and between these front bearing surfaces.

8. Device according to any one of claims 1 to 7, **characterised in that** the connecting mechanism for connecting a pair of parts formed of a receptacle and of a support has at least one rear ball (61) interposed and imprisoned between at least one rear bearing surface of the receptacle (20) and at least one rear bearing surface of the support (22) in order to be able to roll without sliding vertically on and between these rear bearing surfaces.

9. Device according to any one of claims 1 to 8, **characterised in that** the connecting mechanism for connecting a pair of parts formed of a receptacle (20) and of a support (22) comprises a pivot with a longitudinal axis permitting a lateral tilting of the receptacle (20) to at least one side of the support (22) for the purpose of discharging the objects.

10. Device according to claim 9, **characterised in that** said longitudinal pivot is at least partly formed of a ball (57) interposed between a vertical bearing surface of the receptacle (20) oriented upstream with reference to the longitudinal driving direction and a vertical bearing surface of the support (22) oriented downstream with reference to the longitudinal driving direction.

11. Device according to any one of claims 1 to 10, **characterised in that** the connecting mechanism is adapted to permit a tilting of the receptacle (20) to each side of the support (22).

12. Device according to any one of claims 1 to 11, **characterised in that** each receptacle (20) is a small dish adapted to receive individually an object.

13. Object conveying and weighing device comprising:
- an endless chain (11) having a horizontal upper section,
- a driving device for driving with continuous running of the endless chain along a longitudinal driving direction of said upper section,
- object transporting devices distributed along the endless chain, carried by the latter and interlocked in translation with the latter, each transporting device comprising a receptacle (20) suitable for receiving at least one object, a support (22) connected to the driving device in order to be driven by the latter along the longitudinal driving direction, and a connecting mechanism for connecting the receptacle (20) to the support (22), this connecting mechanism being configured to:
o interlock the receptacle (20) and the support (22) in longitudinal translation,
o permit a lateral tilting of the receptacle (20) with respect to the support (22) for the purpose of laterally discharging each object carried by the receptacle,
o and allow a relative displacement of the receptacle (20) upwards with respect to the support (22) with a stroke adapted for the weighing of the receptacle and of the object(s) which it carries,
- at least one weighing station (17) comprising, on said upper section of the endless chain:
o at least one slide arranged along a portion of said upper section of the endless chain in order to be able to cooperate with the receptacles (20) so as to displace them with respect to the supports (22) vertically upwards into the high, weighing position,
o and at least one weighing device (83,86) for weighing the receptacles in the high, weighing position,
**characterised in that** each object transporting device is a device according to any one of claims 1 to 12.

14. Device according to claim 13, **characterised in that** each receptacle (20) is interposed on the endless chain (11) between two rollers (21) mounted freely rotatably about transverse axes of rotation driven in translation along the longitudinal direction by said endless chain(11).

15. Device according to claim 14, **characterised in that** said endless chain (11) is formed by the supports (22) of the transporting devices articulated to one another in pairs successively in the longitudinal direction, each support (22) thus forming a link of the chain, and wherein each support (22) of a transporting device carries a receptacle (20) and an adjacent roller (21).
